# EUROPÄISCHE PATENTSCHRIFT

(11) **EP 0 843 467 B1**
(45) Veröffentlichungstag und Bekanntmachung des Hinweises auf die Patenterteilung: **09.02.2005**
(21) Anmeldenummer: 96118424.9
(22) Anmeldetag: 16.11.1996
(51) Int. Cl.: H04N 7/52, H04N 5/44

(54) **Bussystem für eine Fernsehsignal-Verarbeitungseinrichtung**
Bussystem for a television signal processing device
Système bus pour un dispositif de traitement de signal de télévision

(43) Veröffentlichungstag der Anmeldung: 20.05.1998
(73) Patentinhaber: Micronas GmbH, 79108 Freiburg (DE)
(72) Erfinder: Caesar, Knut, Dipl.-Ing., 79108 Freiburg (DE); Rohrer, Stefan, Dipl.-Ing., 79104 Freiburg (DE); Jünke, Manfred, Dipl.-Ing., 79174 Gundelfingen (DE); Himmel, Thomas, Dipl.-Ing., 77955 Ettenheim (DE); Keller, Stefan, Dipl.-Ing., 79114 Freiburg (DE); Scheffer, Kai, 79211 Denzlingen (DE); Schidlack, Erik, Dipl.-Ing., 79108 Freiburg (DE)

(56) Entgegenhaltungen:
- EP-A- 0 633 692
- EP-A- 0 690 630
- EP-A- 0 703 713
- EP-A- 0 726 680
- WO-A-92/00582
- WO-A-94/24670
- US-A- 5 359 367
- SMPTE JOURNAL, Bd. 103, Nr. 9, 30.September 1994, US, Seiten 627-634, XP000445489 "PROPOSED SMPTE STANDARD for Television - System M/NTSC Composite Video Signals - Bit-Parallel Digital Interface"

## Beschreibung

Die Erfindung betrifft ein Bussystem mit einem hierfür angepaßten Geber und Empfänger für eine digitale Fernsehsignal-Verarbeitungseinrichtung, die auch als Multimedia-Verarbeitungseinrichtung ausgebildet sein kann. Das Bussysteme dient dazu, Videodaten mindestens einer Videodatenquelle und/oder Ergänzungsdaten einer oder mehrerer Ergänzungsdatenquellen zwischen dem Geber und dem Empfänger mittels Datenleitungen, also eines sogenannten Busses, zu übertragen.

Der Bus verbindet räumlich getrennte Signalverarbeitungseinrichtungen, z.B. Prozessoren, die in einem oder in mehreren Geräten zusammenwirken. Im einfachsten Fall verbindet der Bus Signalverarbeitungseinrichtungen auf einer Schaltungsplatine. Eine besondere Erschwernis kann hierbei sein, daß die Takte der Signalverarbeitungseinrichtungen nicht zusammenpassen.

Anwendungsbeispiele für derartige Bussysteme können Fernsehempfänger sein, die je nach Bedarf normgerechte oder nichtnormgerechte Fernsehsignale verarbeiten sollen, wobei neben den Fernsehsignalen auch Ergänzungsdaten, wie z.B. Stereo- oder Mehrfachton, Bildschirm-Textinformation oder Informationen fernsehsignalbezogener Datendienste, ebenfalls verarbeitet werden sollen. Bisher übernehmen in der Regel spezialisierte Prozessoren die einzelnen Funktionen und leiten die jeweiligen Daten über eigene Busse an die Ausgabeeinrichtungen oder andere Prozessoren weiter.

In modernen Fernsehempfängern und in multimediatüchtigen PCs (=Personal Computer) stehen immer leistungsfähigere Prozessoren für die Signalverarbeitung zur Verfügung, so daß es nahezu ohne zusätzlichen Schaltungsaufwand allein durch eine geeignete Programmierung der Prozessoren möglich ist, eine Vielzahl von Fernsehstandards mit Text-, Ton- und weiteren Informationen zu verarbeiten und auf den vorhandenen Ausgabeeinrichtungen wiederzugeben. Der Multimediabereich mit einem hochauflösenden Fernseh- oder Computerbildschirm und einem leistungsfähigen Tonwiedergabesystem bietet hierbei besonders viele Darstellungs- und Wiedergabemöglichkeiten. Die hohe Datenrate der Videodatenquellen und die Vielzahl der möglichen Ergänzungsdaten stellen dabei hohe Forderungen an die jeweiligen Bussysteme, die in der Regel als Parallelbussysteme ausgeführt sind. Für die unterschiedlichen Datenströme werden je nach Taktrate und Datenbreite getrennte Busse verwendet. Hier ergeben sich bei Mehrnormen-Fernsehempfängern und insbesondere bei Multimediasystemen Engpässe, denn bei einem Parallelbus ist für jede Stelle der zu übertragenden Daten auf der Geber- und Empfängerseite, die in der Regel durch monolithisch integrierte Prozessoren gebildet sind, jeweils ein Gehäuseanschluß erforderlich. Die Anzahl der für Busverbindungen zur Verfügung stehenden Anschlüsse ist aber aus Kosten-, Flächen- und Verdrahtungsgründen begrenzt und stellt ein wesentliches Hindernis für den immer komplexer werdenden Datenaustausch zwischen den einzelnen Prozessoren dar.

In EP 0 690 630 A2 ist eine serielle Interface-Schaltung beschrieben, die Video-, Audiound andere Daten, wie z.B. Teletextdaten, in einem einzigen Datenstrom für die Übertragung auf einem Datenbus zusammenfasst. Derartige Anwendungen werden verallgemeinernd als "local area network (LAN)" bezeichnet. Die Übertragung erfolgt über Datenpakete, deren Formate eine Startinformation, die auch als Synchronisationscode dient, eine Endinformation und unterschiedliche Datenbereiche für die verschiedenen Daten aufweisen. In einem Kopfinformationsbereich werden Daten übertragen, die Angaben über die Codierung, den Inhalt, den Umfang der Daten, die Datenrate und weitere Informationen enthalten.

Bei der paketweisen Übertragung von Video- und anderen Daten, können bei den bekannten Systemen unter Umständen Datenfolgen auftreten, die auf der Empfängerseite falsch interpretiert werden, und so zu einem Fehlverhalten des Empfängers führen.

Aufgabe der Erfindung ist es daher, für eine digitale Fernsehsignal-Verarbeitungseinrichtung, die auch durch eine Multimedia-Verarbeitungseinrichtung realisiert sein kann, ein verbessertes Bussystem für Video- und Ergänzungsdaten anzugeben, das an unterschiedliche Fernsehstandards und an unterschiedliche Verarbeitungseinrichtungen angepaßt werden kann und das verbotene Bitfolgen bei der Übertragung vermeidet. Dabei ist der Geber des Bussystems so zu optimieren, daß er sowohl mit vorhandenen, meist einfachen Empfängern zusammenarbeiten kann als auch mit sehr flexiblen Empfängern, deren leistungsfähige Prozessoren ohne eine Schaltungsänderung lediglich über eine einmalige Programmierung an das Bussystem anpaßbar sind.

Die Aufgabe wird entsprechend der Erfindung durch die Merkmale des Anspruchs 1 wie folgt gelöst:
- ein Bussystem für eine Fernsehsignal-Verarbeitungseinrichtung zur Übertragung von Videodaten mindestens einer Videodatenquelle und/oder Ergänzungsdaten einer oder mehrerer Ergänzungsdatenquellen zwischen einem Geber und einem Empfänger mittels eines Busses, wobei
- die Videodaten ursprünglich mit einem ersten Takt und die Ergänzungsdaten ursprünglich mit dem gleichen oder einem zweiten Takt oder mit einem weiteren Takt verknüpft sind,
- auf der Geberseite mittels einer Interfaceschaltung aus den Video- und/oder Ergänzungsdaten ein einziger Datenstrom für den Bus gebildet ist, indem die Interfaceschaltung die Video- und/oder Ergänzungsdaten quellenweise jeweils in zeitlich aufeinanderfolgende Blöcke mit Kennungsdaten für eine Start-, End- oder Längen- und Inhaltskennung zusammenfaßt,
- die Datenrate der übertragenen Blöcke durch einen dritten Takt definiert ist, dessen Taktrate mit der des ersten, zweiten oder eines der weiteren Takte oder der Datenverarbeitungsrate der Empfängerseite des Bussystems verkoppelt ist,
- auf der Empfängerseite mittels einer Erkennungseinrichtung aus dem empfangenen Datenstrom über die Kennungsdaten die einzelnen Blöcke für die weitere Verarbeitung wieder trennbar sind und
- auf der Geberseite mittels einer sich in der Interfaceschaltung befindenden Codiereinrichtung eine Umcodierung der Ergänzungs- und/oder Videodaten oder nachfolgender Daten erfolgt, wobei die Codiereinrichtung jedes Ergänzungsdatenwort in mindestens einen ersten und zweiten Bereich aufspaltet und diese mittels einer entsprechenden Anzahl von ergänzten Datenworten als neue Datenfolge im einzigen Datenstrom überträgt, so dass bestimmte Datenwortkombinationen, die den Werten von Kennungsdaten entsprechen, nicht im Datenstrom auftreten.

Die Vorteile der Erfindung bestehen neben der Einsparung von Anschlußkontakten auf der Geber- und Empfängerseite sowie einer entsprechenden Einsparung von Busleitungen im Wesentlichen in einer Erhöhung der Flexibilität für den jeweiligen Anwendungsfall. Ferner ist auf der Geberseite nur eine eine einzige Interfaceschaltung für die Video- und Ergänzungsdatenquellen erforderlich. Die Kennzeichnung der übertragenen Datenblöcke durch die Kennungsdaten für Start-, End- oder Längenund Inhaltskennung ermöglicht dabei auf der Empfängerseite auf einfache Weise eine Trennung. Auf der Empfängerseite kann die Auswertung der horizontalen und vertikalen Synchronsignale zur Bestimmung der jeweiligen Fernsehsignal-Zeilennummer entfallen. In der Regel reichen für die Trennung die programmierbaren Erkennungseinrichtungen in den empfängerseitigen Prozessoren aus. Konflikte bei der Datenzuordnung werden durch die Kennungsdaten auf der Empfängerseite sicher vermieden, auch wenn die Datenblöcke gegebenenfalls in falschen" Zeilen, z.B. für Testzwecke oder zur Fernsehbild-Untertitelung, übertragen werden. In der Regel werden die quellenbezogenen Datenströme jedoch entsprechend dem engen Zusammenhang mit dem Zeilenraster des jeweiligen Fernseh-Bild-Austast-Synchron-Signalgemisches (=FBAS-Signal) blockweise ohne Vertauschung auf dem Bus übertragen.

Im Fernsehsignal sind die quellenbezogenen Signale unterschiedlichen Zeilen zugeordnet, somit werden die einzelnen Datenblöcke auch zu unterschiedlichen Zeitintervallen gebildet, so daß sie auch zeitlich getrennt auf dem Bus übertragen werden können. Die Textdaten, z.B. beim weit verbreiteten Videotext-Fernsehstandard, werden bekanntlich nur innerhalb bestimmter Zeilen der vertikalen Austastlücke in das Fernsehsignalgemisch eingefügt - eine Videoinformation ist in diesen Zeilen nicht vorhanden. Durch die flexible Steuerung der Kennungsdaten ist es aber auch möglich, während beliebiger Zeilen oder statt ganzer Bildwiedergabeseiten Text- oder andere Daten über den Bus zu übertragen. Über die jeweilige Kennung ist auf der Empfängerseite auch in diesen Fällen ein sichere Trennung ohne Kenntnis der jeweiligen Zeilennummer möglich.

Von Vorteil ist es ferner, wenn bereits auf der Geberseite eine Vorverarbeitung der zugeführten Video- oder Ergänzungsdaten erfolgt, um die zu übertragende Datenmenge zu reduzieren und damit auch den Prozessor auf der Empfängerseite zu entlasten. Dies ist besonders bei der Verarbeitung von Text- oder Audiodaten sinnvoll, weil ihre Datenrate wesentlich nieder ist als bei Videodaten und eine Überabtastung durch den vorgegebenen Videosignal-Digitalisierungstakt lediglich die Datenmenge sinnlos erhöht. Spezialisierte Verarbeitungsschaltungen, die nur eine relativ kleine Fläche der monolithisch integrierten Geberschaltung erfordern, liefern gemäß der Erfindung diese Daten mit einer angepaßten und damit möglichst niederen Datenrate. Über den Bus werden diese Daten zwar mit einer hohen Datenrate übertragen, aber dafür ist die Übertragung nach kurzer Zeit, nämlich nach dem Eintreffen der Endkennung, abgeschlossen. Bis zum Eintreffen der nächsten Startkennung kann der Empfänger den Bus unberücksichtigt lassen.

Erfolgt dagegen die Datenbildung aus dem überabgetasteten Signalgemisch erst auf der Empfängerseite, was mittels eines speziellen Bus-Betriebes nach der Erfindung ebenfalls möglich ist, dann werden das digitalisierte Fernseh-Signalgemisch, also das mit einer hohen Abtastrate digitalisierte FBAS-Signal, oder die Ausgangsdaten der einzelnen Vorverarbeitungsstufen im Geber unverändert über den Bus übertragen. Erst auf der Empfängerseite werden dann aus dem übertragenen Datenstrom die eigentlich interessanten Daten, beispielsweise mittels eines schnellen Mikroprozessors, gebildet. Schnelle Mikroprozessoren in Multimedia- oder Fernsehsignal-Verarbeitungseinrichtungen lassen sich für diesen unzweckmäßigen Busbetrieb zwar programmieren, allerdings wird dabei ein hoher Teil der Verarbeitungskapazität belegt, der dann für andere Signalverarbeitungsaufgaben nicht mehr zur Verfügung steht. Durch die Vorverarbeitung auf der Geberseite gemäß der Erfindung kann jedoch eine wesentliche Entlastung der Prozessoren auf der Empfängerseite erreicht werden.

Die Erfindung und vorteilhafte Ausgestaltungen werden nun anhand der Figuren der Zeichnung näher erläutert:
Fig. 1 zeigt schematisch als Blockschaltbild ein Bussystem nach der Erfindung,
Fig. 2 zeigt im Zeitdiagramm zugehörige Signale,
Fig. 3 zeigt als Beispiel eine übertragene Datenfolge und
Fig. 4 zeigt in einer Hexadezimaldarstellung eine Umcodierung einer Datenfolge.

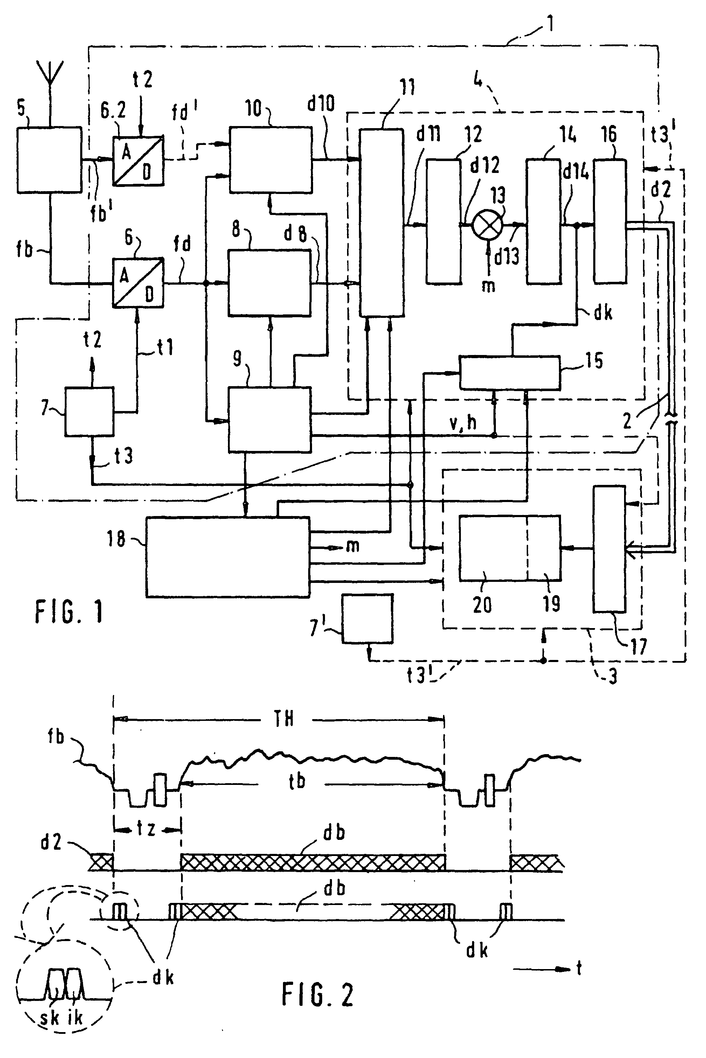

In Fig. 1 ist schematisch als Blockschaltbild ein Ausführungsbeispiel eines Bussystems nach der Erfindung dargestellt. Es läßt sich grob in drei Bereiche gliedern, einen Geberbereich 1, einen Bus 2 und einen Empfängerbereich 3. Dem Geberbereich 1 zugeordnet sind die Einrichtungen zur Bildung der Video- und Ergänzungsdatenströme. Die eigentliche Zusammenfassung dieser Datenströme zu einem einzigen Datenstrom erfolgt in einer Interfaceschaltung 4, deren Ausgang die zu übertragenden Daten für den Bus 2 liefert. In Fig. 1 ist der Geberbereich 1 mit einer strichpunktierten Linie umschrieben, wobei die Grenzziehung für eine monolithische Integration des Gebers 1 zweckmäßig aber nicht zwingend ist.

Für das Ausführungsbeispiel von Fig. 1 ist angenommen, daß ein Tuner-und-Zwischenfrequenzumsetzer 5 ein Fernsehsignal empfängt und es in einen tieferen Frequenzbereich umsetzt, damit das umgesetzte Signal fb mittels eines Analog/Digital-Umsetzers 6 digitalisiert werden kann. Der zugehörige Digitalisierungstakt t1 stammt aus einer Taktquelle 7, die auch weitere Taktsignale t2, t3 liefern kann. Statt des Tuner-und-Zwischenfrequenzumsetzer 5 kann selbstverständlich auch eine andere Einrichtung das Fernsehsignalgemisch fb liefern, beispielsweise ein Kabeltuner, ein Videorekorder, eine Videokamera oder ein Rechner mit Multirnediaeigenschaften, sofern diese Einrichtungen das Fernsehsignal in der üblichen Form als Fernseh-Bild-Austast-Synchron-Signalgemisch (= FBAS-Signal) oder als Videorecorder-Ausgangssignal, z.B. ein S-VHS"-Signal, zur Verfügung stellen.

Das digitalisierte Fernsehsignalgemisch fd am Ausgang des Analog/Digital-Umsetzers 6 ist im Geber 1 einfachen Signalvorverarbeitungsstufen zugeführt, die an den jeweiligen Standard des Video- oder Ergänzungssignals angepaßt und beispielsweise aus digitalen Fernsehempfängern bekannt sind. Die Videosignalvorverarbeitung erfolgt dabei in der Stufe 8, die im folgenden als Videodatenquelle bezeichnet wird und diejenigen Stufen enthält, mit denen aus dem digitalisierten Signalgemisch fd die Helligkeits- und Farbinformation getrennt oder dekodiert werden kann. Eine weitere Signalverarbeitungseinrichtung 9, die im folgenden als Synchronsignaldetektor bezeichnet wird, bildet aus dem digitalisierten Signalgemisch fd die Horizontal- und Vertikal-Synchronsignale h bzw. v, die beispielsweise auch für die richtige Funktion der Videodatenquelle 8 erforderlich sind. Eine weitere Datenverarbeitungsstufe 10, die im folgenden als Ergänzungsdatenquelle bezeichnet wird, wird ebenfalls mit dem digitalisierten Signalgemisch fd gespeist. Mit der Ergänzungsdatenquelle 10 werden beispielsweise Teletextdaten oder solche Daten im Fernsehsignalgemisch fd erfaßt, die bereits im analogen Fernsehsignalgemisch fb als Daten enthalten sind. Da ihre Datenrate wesentlich niedriger als die der digitalisierten Videosignale ist, kann auch ihre Verarbeitung mit einer niedrigen Taktrate erfolgen. Es kann daher zweckmäßig sein, wenn der Tuner und Zwischenfrequenzumsetzer 5 für diese Daten eine eigene Frequenzumsetzung durchführt, so daß die Digitalisierung mit einer niedrigen Taktrate erfolgen kann, nämlich durch den Takt t2 in Verbindung mit einem eigenen Analog/Digital-Umsetzer 6.2.

Es wird darauf hingewiesen, daß außer den in Fig. 1 dargestellten Quellen 8 und 10 auch weitere vorhanden sein können. Bei bestimmten Videorecordersystemen sind beispielsweise die Helligkeits- und Farbinformationen getrennt gespeichert, so daß sich auch eine getrennte Verarbeitung in getrennten Videodatenquellen anbietet. Ähnliche Überlegungen können auch für eine Mehrfachausbildung der Ergänzungsdatenquelle 10 angestellt werden. Eventuell ist es auch dort sinnvoller, spezialisierte, aber einfache Ergänzungsdatenquellen parallel zu schalten, als eine einzige vorzusehen, die zwar universell aber auch sehr umfangreich ist.

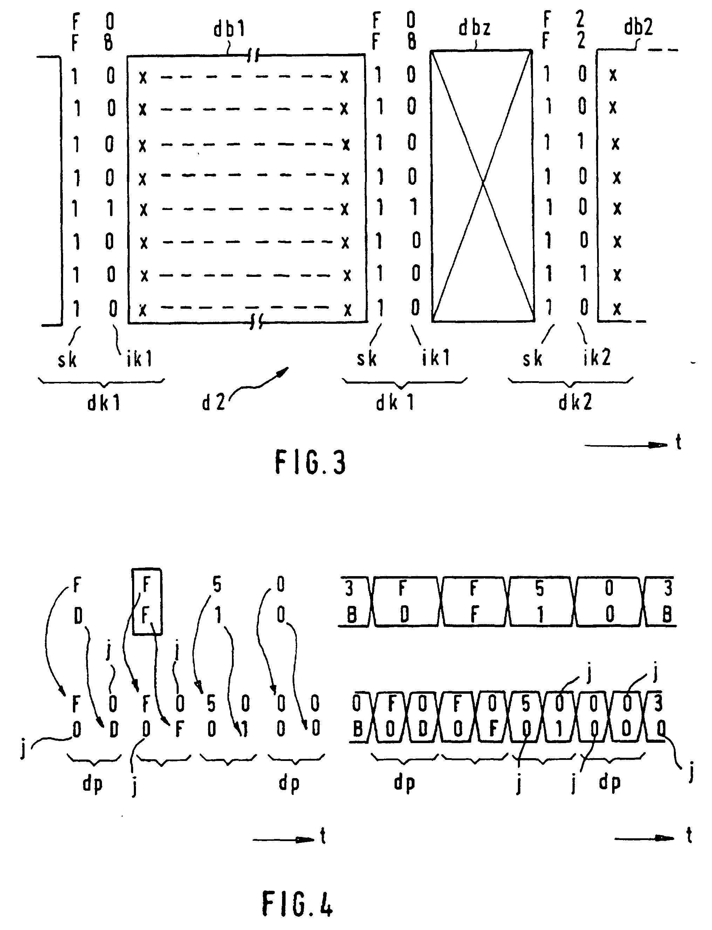

In der Interfaceschaltung 4 werden die Ausgangssignale d8, d10 der einzelnen Quellen 8, 10 mittels eines Multiplexers 11 zu einem einzigen Datenstrom d11 zusammengeführt. Da in dem jeweiligen Datenstrom d11 die Daten der Quellen 8, 10 mindestens für die Dauer einer Zeile nur von einer Quelle stammen, können mittels eines Interpolators 12 die Daten d8, d10 an die von der Empfängerseite 3 und damit der Wiedergabeeinrichtung vorgegebenen Anzahl von Abtastwerten angepaßt werden. Zweckmäßig ist es hierbei, wenn sich die Interpolation nach der Verarbeitungsrate des Empfängers 3 richtet, die in Fig. 3 dem dritten Takt t3 entspricht. Dies ist besonders dann erforderlich, wenn der Empfängerbereich 3 einen fest vorgegebenen Verarbeitungstakt aufweist, beispielsweise wenn ein persönlicher Rechner (=PC) als Multimedia-Wiedergabeeinrichtung vorgesehen ist. Ist dagegen der Empfangsbereich 3 einem Fernsehempfänger zuzurechnen, dann entspricht in der Regel der Takt t3 dem gesamten Systemtakt und ist somit auch identisch zum Digitalisierungstakt t1. Als Systemtakt wird in digitalen Fernsehempfängern häufig ein Takt von 20,25 Mhz und in Pcs ein Takt von 13,5 Mhz verwendet. Mit dem Interpolator 12 in der Interfaceschaltung 4 würde im Falle der Bild- oder Textwiedergabe über einen PC die Abtastrate auf 66,6 Prozent der Digitalisierungsrate des FBAS-Signals fb reduziert werden. Die Übertragungsrate der Daten auf dem Bus 2 ist entspricht dabei dem 13,5MHz-Systemtakt des PCs.

Das Ausgangssignal d12 des Interpolators 12 kann mittels eines Multiplizierers 13 verändert werden. Sind die Ausgangssignale d8, d10 normiert, dann ist in der Regel der Multiplizierer 13 nicht erforderlich. Selbstverständlich können den einzelnen Quellen 8,10 auch eigene Multiplizierer zugeordnet sein. Im einfachsten Fall handelt es sich um eine einfache Stellenverschiebung der Binärstellen.

Die Ausgangssignale d11, d12 bzw. d13 können mittels eines Codierers 14 umkodiert werden, um die Redundanz der zu übertragenden Daten d2 zu erhöhen oder bestimmte Datenkonfigurationen (vrgl. hierzu die Ausführungen zu Fig. 4) zu vermeiden. Die Redundanz kann beispielsweise durch das Hinzufügen eines Parity-Bits vergrößert werden..

Mittels einer Einfügungsschaltung 15 werden Kennungsdaten dk (vrgl. Fig. 2) zu Beginn und Ende jedes zu übertragenden Datenblockes in den Datenstrom d14 eingefügt. Mit den Kennungsdaten dk wird für den jeweils zu übertragenden Block db eine Start- und eine End- oder Längenkennung vorgegeben. Ferner wird mit den Kennungsdaten auch eine Inhaltskennung ik eingefügt, die eine Information über den Inhalt des jeweiligen Datenblocks ermöglicht. Über diese Inhaltskennung ik ist auf der Empfängerseite 3 wieder eine quellenbezogene Trennung und Verarbeitung der einzelnen Datenblöcke möglich. Die Kennungsdaten dk können sich dabei aus Datenworten oder Datenfolgen zusammensetzen.

Den Ausgang der Interfaceschaltung 4 bildet ein Pufferspeicher 16 oder FIFO (= First in first out), der gegebenenfalls vorhandene Taktunterschiede zwischen dem Datenstrom d14 und dem Datenstrom d2 auf dem Bus 2 ausgleichen kann. In der Regel enthält auch die Empfangsseite 3 im Eingang einen Pufferspeicher 17 oder FIFO, um Unterschiede zwischen den Taktphasen und/oder Datenraten des Busses 2 und des Empfängers 3 auszugleichen. Die Synchronisation des Gebers 2 und des Empfängers 3 über die Pufferspeicher 16, 17 kann auch dadurch erfolgen, daß der Pufferspeicher 16 mit einem Taktsignal t3' aus einer Taktquelle 7', die mit dem Empfänger 3 verkoppelt ist, angesteuert wird.

In dem Blockschaltbild von Fig. 1 ist schließlich eine Steuereinrichtung 18 schematisch dargestellt, deren Funktion beispielsweise durch einen Mikroprozessor auf der Geberoder Empfängerseite 1 bzw. 3 auf einfache Weise realisiert sein kann. Mittels der Steuereinrichtung 18 kann beispielsweise der Multiplexer 11 im stationären Betrieb gehalten werden. Die Steuereinrichtung 18 liefert gegebenenfalls auch einen Multiplikationsfaktor m an den Multiplizierer 13. Ferner kann mit der Steuereinrichtung 18 auch die Einfügung der Kennungsdaten dk über die Einfügungsschaltung 15 ganz oder teilweise unterdrückt werden. Die Unterdrückung aller oder einzelner Kennungsdaten dk und das Anhalten des Multiplexers 11 entsprechen verschiedenen Betriebszuständen, die auch Auswirkungen auf den Empfänger 3 haben. Für Testzwecke kann es beispielsweise erforderlich sein, daß im Empfänger 3 das digitalisierte Signal fd oder eines der Signale d8, d10 über eine längeren Zeitraum zur Verfügung steht. Für diesen Fall wird mittels der Steuereinrichtung 18 die Interfaceschaltung 4 und gegebenenfalls die Quelle 8 oder 10 auf Durchgang geschaltet. Die hierfür erforderlichen Steuerleitungen sind in Fig. 1 der Übersicht wegen nicht dargestellt.

In der Einfügungsschaltung 15 sind die Kennungsdaten dk gespeichert, die entsprechend der jeweiligen Norm von der Steuereinrichtung 18 abgerufen werden können. Über spezielle Programmiermittel, die in Fig. 1 nicht dargestellt sind, lassen sich die Kennungsdaten dk in der Einfügungsschaltung 15 programmieren.

Der Empfänger 3 weist nach dem Pufferspeicher 17 eine Erkennungseinrichtung 19 auf, die mit einem Vollbildspeicher 20 gekoppelt ist. Je nach den übertragenen Kennungsdaten dk oder einer mitlaufenden Zeilen- und Halbbildzählung über gegebenenfalls zusätzlich übertragene Vertikal- und Horizontalsteuersignale v bzw. h werden die über den Bus 2 empfangenen Daten d2 in die zugehörigen Bereiche des Speichers 20 eingelesen. Dort können sie von der Wiedergabeeinrichtung als Video- oder Ergänzungsdaten zu beliebigen Zeitpunkten wieder ausgelesen werden. Auf dem Bildschirm wird somit eine gleichzeitige Wiedergabe von Bild und Text, auch ganz unterschiedlicher Quellen ermöglicht. Der Empfänger 3 unterscheidet sich im einfachsten Fall nicht von bekannten Empfängern in einfachen Fernsehsignal-Bussystemen.

In Fig. 2 sind schematisch im Zeitdiagramm einige Signale des Bussystems von Fig. 1 dargestellt. Die erste Zeile zeigt schematisch das analoge FBAS-Signal fb, dem auch das digitalisierte Signal fd am Ausgang des Analog/Digitalumsetzers 6 entspricht. Die Zeilenperiode TH enthält dabei das Zeilenrücklaufintervall tz und das Bildintervall tb. Während des Vertikalrücklaufs, während der die Bildwiedergabeeinrichtung dunkel geschaltet ist, können wie bereits mehrfach erwähnt im FBAS-Signal während einiger Zeilen im Intervall tb Ergänzungsdaten vorhanden sein, z.B. Signale oder Daten für "PAL-Plus", "VPS", "CAPTION", "WST", "WSS", "ANTIOPE", "TELETEXT", NABTS", VITC" und andere. Somit kann bei der Vorverarbeitung der Signale im Geber nie eine Kollision zwischen Videodaten und Ergänzungsdaten stattfinden. Die Zuordnung von Ergänzungsdaten und Videodaten erfolgt über Zeitfenster, die durch Auswertung der abgetrennten Horizontal- und Vertikal-Synchronsignale im Synchronsignaldetektor 9 bestimmt sind.

In der zweiten Zeile wird der auf dem Bus 2 übertragene Datenstrom d2 schematisch dargestellt. Während der Zeilenrücklaufintervalle tz findet entweder keine Datenübertragung auf dem Bus 2 statt oder die jeweils gesendeten Daten sind als bedeutunglos auf der Empfängerseite 3 anzusehen, weil sie keine gültigen Kennungsdaten kd aufweisen. Der Datenstrom d2 enthält auf diese Weise unterscheidbare Datenblökke db, deren Anfang und Ende durch Kennungsdaten dk bestimmt sind, die dem jeweiligen Datenblock db hinzugefügt werden, vgl. die dritte Zeile von Fig. 2. Im einfachsten Fall setzen sich die Kennungsdaten dk am Blockanfang aus einer Start- und Inhaltskennung sk bzw. ik zusammen. Die Kennungsdaten dk umfassen im einfachsten Fall zwei Datenworte, es kann sich jedoch auch um eine ganze Datenfolge handeln. Die Inhaltskennung ik kann dabei eine Information über die jeweilige Datenblocklänge enthalten, wenn unterschiedlich lange Datenblöcke auf dem Bus 2 zu übertragen sind. Zur Kennzeichnung des Blockendes werden die Kennungsdaten dk jedoch am einfachsten wiederholt oder eine separate Endkennung eingefügt. Bei der Startkennung ist es wichtig, daß sie kein Datenwort oder keine Datenfolge enthält, die im nachfolgenden Datenblock auftreten können. Bei digitalisierten Analogsignalen, insbesondere wenn sie normiert sind, ist die Einhaltung dieser Bedingung nicht sehr schwierig, wenn für die Start- und Endkennung die Extremwerte des vorhandenen Datenbereiches verwendet werden, beispielsweise würden sich für positive Binärzahlen die Binärwerte 0000... oder 1111... anbieten. Die Auslassung dieser extremen Digitalisierungsbereiche für die auf dem Bus zu übertragenden Daten stellt keine wesentliche Einschränkung dar. Anders sieht es aus, wenn Ergänzungsdaten zu übertragen sind, die prinzipiell jedes der möglichen Datenworte enthalten können.

In Fig. 3 ist der übertragene Datenstrom d2 auf dem Bus 2 schematisch anhand eines Zahlenbeispiels dargestellt, wobei jedes Datenwort 8 Binärstellen umfaßt. Ein Datenwort mit 8 Binärstellen wird üblicherweise auch als Byte bezeichnet. Ein erster Datenblock db1 beginnt mit einer Startkennung sk aus lauter Einsen, die dem Hexadezimalcode FF" entspricht. Die Inhaltskennung ik1 ist im Hexadezimalcode 08". Beide Kennungen bilden zusammen eine erste Blockkennung, nämlich die Kennungsdaten dk1. Dadurch wird der erste Datenblock db1, der beispielsweise Ergänzungsdaten enthält, auf dem Datenbus angekündigt. Das Ende des Datenblockes db1 wird durch eine Wiederholung der Kennungsdaten dk1 signalisiert, also die gleiche Datenfolge FF, 08" wie zu Beginn des Blockes. Die folgenden Daten dbz, die gegebenenfalls im Zeilenrücklaufintervall anfallen, werden auf der Empfängerseite 3 nicht berücksichtigt. Erst wenn wieder die Startkennung sk erscheint, aktiviert die Erkennungseinrichtung 19 die quellenbezogene Abspeicherung der empfangenen Daten d2 im Speicher 20.

Das nach der Startkennung sk folgende Byte hat den Hexadezimalcode 22" und legt den Inhalt eines zweiten Datenblocks db2 fest. Die Kennungsdaten dk2 des zweiten Blockes db2 lassen sich somit im Hexadezimalcode durch FF, 22" darstellen. In dieser Weise schreitet die Datenübertragung auf den Bus von Block zu Block fort.

Die bereits erwähnte Kollision von Kennungsdaten dk mit dem Dateninhalt der zu übertragenden Blöcke kann durch eine Umcodierung der Ergänzungsdaten d10 mittels der Codiereinrichtung 14 vermieden werden. Hierbei macht sich die Erfindung die geringe Datenrate der Ergänzungsdaten d10 zunutze, indem das jeweilige Datenwort in zwei oder mehr Bereiche aufgespalten wird und die getrennten Bereiche in aufeinanderfolgenden Datenworten übertragen werden, die so ergänzt sind, daß die verbotenen Binärzustände nicht auftreten. In Fig. 4 ist dies mittels einer Bytefolge im Hexadezimalcode schematisch dargestellt. Jedes Byte wird dabei in zwei gleichgroße Stellenbereiche aufgespalten und bilden ein Byte-Paar dp, das als neue Datenfolge übertragen wird. Im linken Teil der Figur wird der Zusammenhang zwischen alter und neuer Position der beiden Byte-Bereiche und ihre jeweilige Ergänzung j dargestellt. Auf der rechten Seite ist die resultierende Datenfolge dargestellt. Die verbotene" Datenfolge FF" ist somit im Blockinhalt des neuen Datenstroms nicht mehr vorhanden und steht somit exklusiv für die Kennungsdaten dk zur Verfügung. Die Erhöhung der Datenrate auf den doppelten Wert spielt bei der geringen Datenrate der Ergänzungsdaten keine Rolle.

## Patentansprüche

1. Bussystem (1,2,3) für eine Fernsehsignal-Verarbeitungseinrichtung zur Übertragung von Videodaten (d8) mindestens einer Videodatenquelle (8) und/oder Ergänzungsdaten (d10) einer oder mehrerer Ergänzungsdatenquellen (10) zwischen einem Geber (1) und einem Empfänger (3) mittels eines Busses (2), wobei
- die Videodaten (d8) ursprünglich mit einem ersten Takt (t1) und die Ergänzungsdaten (d10) ursprünglich mit dem gleichen (t1) oder einem zweiten Takt (t2) oder mit weiteren Takten verknüpft sind und
- auf der Geberseite (1) mittels einer Interfaceschaltung (4) aus den Video- (d8) und/oder Ergänzungsdaten (d10) ein einziger Datenstrom (d2) für den Bus (2) gebildet ist, indem die Interfaceschaltung (4) die Video- und/oder Ergänzungsdaten quellenweise jeweils in zeitlich aufeinanderfolgende Blöcke (db; db1, db2) mit Kennungsdaten (dk; dk1, dk2) für eine Start-, End- oder Längen- und Inhaltskennung zusammenfaßt,
- die Datenrate der übertragenen Blöcke (db) durch einen dritten Takt (t3) definiert ist, dessen Taktrate mit der des ersten, zweiten oder eines der weiteren Takte oder der Datenverarbeitungsrate der Empfängerseite (3) des Bussystems (1,2,3) verkoppelt ist, und
- auf der Empfängerseite (3) mittels einer Erkennungseinrichtung (19) aus dem empfangenen Datenstrom (d2) über die Kennungsdaten (dk; dk1, dk2) die einzelnen Blöcke (db; db1,db2) für die weitere Verarbeitung wieder trennbar sind,
**dadurch gekennzeichnet, dass**
auf der Geberseite (1) mittels einer sich in der Interfaceschaltung befindenden Codiereinrichtung (14) eine Umcodierung der Ergänzungs- (d10) und/oder Videodaten (d8) oder nachfolgender Daten (d11, d12, d13) erfolgt, wobei die Codiereinrichtung (14) jedes Ergänzungsdatenwort (d10) in mindestens einen ersten und zweiten Bereich aufspaltet und diese mittels einer entsprechenden Anzahl von ergänzten Datenworten (dp) als neue Datenfolge im einzigen Datenstrom (d2) überträgt, so dass bestimmte Datenwortkombinationen, die den Werten von Kennungsdaten (dk; dk1, dk2) entsprechen, nicht im Datenstrom auftreten.

2. Geber (1) für ein Bussystem (1,2,3) gemäß Anspruch 1, das für eine Fernsehsignaloder Multimedia-Verarbeitungseinrichtung Video- (d8) und/oder Ergänzungsdaten (d10) zwischen dem Geber (1) und einem Empfänger (3) über einen Bus (2) überträgt, wobei
- der Geber (1) mit den Videodaten (d8) mindestens einer Videodatenquelle (8) und/oder den Ergänzungsdaten (d10) einer oder mehrerer weiterer Ergänzungsdatenquellen (10) gespeist ist, dabei sind die Videodaten (d8) ursprünglich mit einem ersten Takt (t1) und die Ergänzungsdaten (d10) ursprünglich mit dem gleichen oder einem zweiten Takt (t2) oder mit weiteren Takten verknüpft,
- der Geber (1) mittels einer Interfaceschaltung (4) aus den Video- (d8) und/oder Ergänzungsdaten (d10) einen einzigen Datenstrom (d2) für den Bus (2) bildet, indem die Interfaceschaltung die Video- und/oder die Ergänzungsdaten quellenweise jeweils in zeitlich aufeinanderfolgende Blöcke (db; db1, db2) mit Kennungsdaten (dk; dk1, dk2) für eine Start-, End- oder Längen- und Inhaltskennung zusammenfaßt.

3. Geber (1) nach Anspruch 2, **dadurch gekennzeichnet, daß** die Datenrate der übertragenen Blöcke (db; db1, db2) durch einen dritten Takt (t3) definiert ist, dessen Taktrate an die Datenverarbeitungsrate der Empfängerseite (3) des Bussystems (1,2,3) anpaßbar ist.

4. Geber (1) nach Anspruch 2 oder 3, **dadurch gekennzeichnet, daß** die Interfaceschaltung (4) von einem Synchronsignaldetektor (9) gesteuert ist, der aus einem mit den Video- (d8) und/oder Ergänzungsdaten (d10) verkoppelten Fernsehsignalgemisch (fd) bestimmt, in welchen zeitlichen Intervallen (tb) die Video- und/oder Ergänzungsdaten zur Verfügung stehen und hierfür die entsprechenden Kennungsdaten (dk; dk1, dk2)) in der Interfaceschaltung (4) für die zu übertragenden Blöcke (db; db1,db2) auslöst.

5. Geber (1) nach Anspruch 3, **dadurch gekennzeichnet, daß** die Interfaceschaltung (4) die Video- (d8) und/oder Ergänzungsdaten (d10) mittels eines Pufferspeichers (16) an den dritten Takt (t3) und/oder mittels eines Interpolators (12) an eine von der Empfängerseite (3) vorgegebene Anzahl von Abtastwerten anpaßt.

6. Geber (1) nach einem der Ansprüche 2 bis 5, **dadurch gekennzeichnet, daß** die Interfaceschaltung (4) mindestens einen Multiplizierer (13) für die Verstärkung/Abschwächung der Video- (d8) und/oder Ergänzungsdaten (d10) enthält.

7. Geber (1) nach Anspruch 2, **dadurch gekennzeichnet, daß** eine Steuereinrichtung (18) den Betriebsmodus des Busssystems (1,2,3) ändert.

8. Geber (1) nach nach Anspruch 7, **dadurch gekennzeichnet, daß** die Steuereinrichtung (18) den Bus (2) wahlweise für Video- (d8) und Ergänzungsdaten (d10) oder nur für Video- oder nur für Ergänzungsdaten freigibt.

9. Geber (1) nach Anspruch 7, **dadurch gekennzeichnet, daß** in den Kennungsdaten (dk; dk1, dk2) die Inhaltskennung (ik) der einzelnen Blöcke (db; db1, db2) von der Steuereinrichtung (18) unterdrückt sind.

10. Geber (1) nach Anspruch 7, **dadurch gekennzeichnet, daß** die Steuereinrichtung (18) die Eingangsdaten (fd, fd') der jeweiligen Video- (8) oder Ergänzungsdatenquelle (10) oder deren Ausgangsdaten (d8 bzw. d10) in unveränderter Form auf den Bus (2) schaltet.

## Claims

1. A bus system (1, 2, 3) for a television signal processing device for transferring video data (d8) of at least one video data source (8) and/or supplementary data (d10) of one or more supplementary-data sources (10) between a transmitter (1) and a receiver (3) by means of a bus (2), wherein:
- the video data (d8) is originally locked to a first clock (t1) and the supplementary data (d10) is originally locked to the same (t1) or a second clock (t2) or to further clocks;
- at the transmitter end (1), a single data stream (d2) for the bus (2) is formed from the video (d8) and/or supplementary data (d10) by means of an interface circuit (4) which combines the video and/or supplementary data, source by source, into blocks (db; db1, db2) following each other successively in time and containing identification data (dk; dk1, dk2) for start and end, or start and length, and content identification;
- the data rate of the transferred blocks (db) is defined by a third clock (t3) whose clock rate is locked to that of the first or second clock or of one of the further clocks or to the data processing rate of the receiver end (3) of the bus system (1, 2, 3); and
- at the receiver end (3), the individual blocks (db; db1, db2) are separable from the received data stream (d2) via the identification data (dk; dk1, dk2) by means of a recognition device (19) to enable further processing,
**characterized in that**
at the transmitter end (1), the supplementary data (d10) and/or video data (d8) or subsequent data (d11, d12, d13) is recoded by means of an encoder (14) contained in the interface circuit, the encoder (14) splitting each supplementary-data word (d10) into at least a first portion and a second portion and transmitting said first and second portions by means of a corresponding number of supplemented data words (dp) as a new data sequence in a single data stream (d2), so that particular data word combinations which correspond to the values of identification data (dk; dk1, dk2) will not occur in the data stream.

2. A transmitter (1) for a bus system (1, 2, 3) as claimed in claim 1 which transfers video (d8) and/or supplementary data (d10) between the transmitter (1) and a receiver (3) over a bus (2) in a television signal or multimedia processing device, wherein:
- the transmitter (1) is fed with the video data (d8) of at least one video data source (8) and/or with the supplementary data (d10) of one or more supplementary-data sources (10), the video data (d8) being originally locked to a first clock (d1), and the supplementary data (10) being originally locked to the same or a second clock (t2) or to further clocks; and
- the transmitter (1) forms a single data stream (d2) for the bus (2) from the video (d8) and/or supplementary data (d10) by means of an interface circuit (4) which combines the video and/or supplementary data, source by source, into blocks (db; db1, db2) following each other successively in time and containing identification data (dk; dk1, dk2) for start, end or length and content identification.

3. A transmitter (1) as claimed in claim 2, **characterized in that** the data rate of the transferred blocks (db; db1, db2) is defined by a third clock (t3) whose clock rate is adaptable to the data processing rate of the receiver end (3) of the bus system (1, 2, 3).

4. A transmitter (1) as claimed in claim 2 or 3, **characterized in that** the interface circuit (4) is controlled by a sync-signal detector (9) which determines from a television signal (fd) locked to the video (d8) and/or supplementary data (d10) in what time intervals (tb) the video and/or supplementary data are available, and, for this purpose, initiates the transfer of the corresponding identification data (dk; dk1, dk2) in the interface circuit (4) for the blocks (db; db1, db2) to be transferred.

5. A transmitter (1) as claimed in claim 3, **characterized in that** the interface circuit (4) adapts the video (d8) and/or supplementary data (d10) to the third clock (t3) by means of a buffer (16) and/or to a number of sample values predetermined by the receiver end (3) by means of an interpolator (12).

6. A transmitter (1) as claimed in any one of claims 2 to 5, **characterized in that** the interface circuit (4) comprises at least one multiplier (13) for amplifying/attenuating the video (d8) and/or supplementary data (d10).

7. A transmitter (1) as claimed in claim 1, **characterized in that** a controller (18) changes the operating mode of the bus system (1, 2, 3).

8. A transmitter (1) as claimed in claim 7, **characterized in that** the controller (18) allows video (d8) and supplementary data (d10) or only video data or only supplementary data to be transferred over the bus (2).

9. A transmitter (1) as claimed in claim 7, **characterized in that** in the identification data (dk; dk1, dk2), the content identifications (ik) of the individual blocks (db; db1, db2) are suppressed by the controller (18).

10. A transmitter (1) as claimed in claim 7, **characterized in that** the controller (18) causes the input data (fd, fd') or output data (d8, d10) of the respective video data source (8) or supplementary-data source (10) to be placed on the bus (2) in unchanged form.

## Revendications

1. Système de bus (1, 2, 3) pour un dispositif de traitement de signaux de télévision en vue de la transmission des données vidéo (d8) d'au moins une source de données vidéo (8) et/ou des données complémentaires (d10) d'une ou plusieurs source de données complémentaires (10) entre un transmetteur (1) et un récepteur (3) au moyen d'un bus (2), dans lequel :
- les données vidéo (d8) sont combinées initialement à une première cadence (t1) et les données complémentaires (d10) sont combinées initialement à la même cadence (t1) ou à une deuxième cadence (t2) ou à d'autres cadences et
- du côté du transmetteur (1), on forme, au moyen d'un circuit d'interface (4), à partir des données vidéo (d8) et/ou des données complémentaires (d10), un flux de données unique (d2) pour le bus (2), du fait que le circuit d'interface (4) réunit les données vidéo (d8) et/ou les données complémentaires (d10) à la manière d'une source à chaque fois en blocs (db ; db1, db2) qui se succèdent dans le temps et qui comportent des données d'identification (dk ; dk1, dk2) pour une identification de début, de fin ou de longueurs et de contenu,
- le taux de données des blocs transmis (db) est défini au moyen d'une troisième cadence (t3) dont le taux de cadencement est couplé avec la première, la deuxième ou une des autres cadences ou le taux de traitement de données du côté du système de bus (1, 2, 3) qui est proche du récepteur (3), et
- du côté du récepteur (3), les différents blocs (db ; db1, db2) peuvent être de nouveau séparés pour la suite du traitement, au moyen d'un dispositif de reconnaissance (19), à partir du flux de données (d2) reçu, en utilisant les données d'identification (dk ; dk1, dk2),
**caractérisé en ce que**
du côté du transmetteur (1), on réalise un transcodage des données complémentaires (d10) et/ou des données vidéo (d8) ou de données suivantes (d11, d12, d13) au moyen d'un dispositif de codage (14) qui se trouve dans le circuit d'interface (4), le dispositif de codage (14) décomposant chaque mot de données complémentaires (d10) en au moins une première et une deuxième zones (d10) et transmettant ces dernières au moyen d'un nombre correspondant de mots de données complétées (dp) sous la forme d'une nouvelle suite de données se trouvant dans le flux de données unique (d2) de telle sorte que des combinaisons de valeur de données déterminées, qui correspondent aux valeurs des données d'identification (dk ; dk1, dk2), n'apparaissent pas dans le flux de données.

2. Transmetteur (1) pour un système de bus (1, 2, 3) selon la revendication 1, qui transmet, pour un dispositif de traitement de signaux de télévision ou de signaux de multimédia, des données vidéo (d8) et/ou des données complémentaires (d10) entre le transmetteur (1) et le récepteur (3) par l'intermédiaire d'un bus (2), dans lequel
- le transmetteur (1) est alimenté par des données vidéo (d8) provenant d'au moins une source de données vidéo (8) et/ou des données complémentaires (d10) provenant d'une ou plusieurs autres sources de données complémentaires (10), les données vidéo (d8) étant, dans ce cas, combinées initialement à une première cadence (t1) et les données complémentaires (d10) étant combinées initialement à la même cadence (t1) ou à une deuxième cadence (t2) ou à d'autres cadences,
- le transmetteur (1) forme, au moyen d'un circuit d'interface (4), à partir des données vidéo (d8) et/ou des données complémentaires (d10), un flux de données unique (d2) pour le bus (2) ), du fait que le circuit d'interface (4) réunit les données vidéo (d8) et/ou les données complémentaires (d10) à la manière d'une source à chaque fois en blocs (db ; db1, db2) qui se succèdent dans le temps et qui comportent des données d'identification (dk ; dk1, dk2) pour une identification de début, de fin ou de longueur et de contenu.

3. Transmetteur (1) selon la revendication 2, **caractérisé en ce que** le taux de données des blocs transmis (db ; db1, db2) est défini au moyen d'une troisième cadence (t3) dont le taux de cadencement peut être couplé au taux de traitement des données du côté du système de bus (1, 2, 3) qui est proche du récepteur (3).

4. Transmetteur (1) selon la revendication 2 ou 3, **caractérisé en ce que** le circuit d'interface (4) est commandé par un détecteur de signal de synchronisation (9) qui détermine, à partir d'un mélange de signaux de télévision (fd) qui est couplé avec les données vidéo (d8) et/ou les données complémentaires (d10), dans quel intervalle de temps (tb) les données vidéo (d8) et/ou les données complémentaires (d10) sont disponibles et qui déclenche, à cet effet, les données d'identification (dk ; dk1, dk2) correspondantes dans le circuit d'interface (4) pour les blocs (db ; db1, db2) qui sont à transmettre.

5. Transmetteur (1) selon la revendication 5, **caractérisé en ce que** le circuit d'interface (4) adapte les données vidéo (d8) et/ou les données complémentaires (d10), au moyen d'une mémoire tampon (16), à la troisième cadence (t3) et/ou au moyen d'un interpolateur (12), à un nombre prédéterminé de valeurs d'échantillonnage qui se trouvent du côté du récepteur (3).

6. Transmetteur (1) selon l'une quelconque des revendications 2 à 5, **caractérisé en ce que** le circuit d'interface (4) contient au moins un multiplicateur (13) pour l'amplification/affaiblissement des données vidéo (d8) et/ou des données complémentaires (d10).

7. Transmetteur (1) selon la revendication 2, **caractérisé en ce qu'**un dispositif de commande (18) modifie le mode de fonctionnement du système de bus (1, 2, 3).

8. Transmetteur (1) selon la revendication 7,
**caractérisé en ce que** le dispositif de commande (18) libère le bus (2) de manière optionnelle pour les données vidéo (d8) et les données complémentaires (d10) ou pour seulement pour les données vidéo (d8) ou pour seulement pour les données complémentaires (d10).

9. Transmetteur (1) selon la revendication 7, **caractérisé en ce que**, dans les données d'identification (dk ; dk1, dk2), l'identification de contenu (ik) des différents blocs (db ; db1, db2) est supprimée par le dispositif de commande (18).

10. Transmetteur (1) selon la revendication 7, **caractérisé en ce que** le dispositif de commande (18) commute, de manière non modifiée sur le bus (2), les données d'entrée (fd, fd') de la source de données vidéo (8), respectivement de la source de données complémentaires (10), ou les données de sortie (d8, respectivement d10) de ces dernières.
